# EUROPÄISCHE PATENTSCHRIFT

(11) **EP 1 118 405 B1**
(45) Veröffentlichungstag und Bekanntmachung des Hinweises auf die Patenterteilung: **06.10.2004**
(21) Anmeldenummer: 00250428.0
(22) Anmeldetag: 12.12.2000
(51) Int. Cl.: B23B 5/16

(54) **Manuelles Abmantelgerät**
Hand tube stripping apparatus
Appareil de dénudage manuel de tubes

(30) Priorität: 15.12.1999 DE 19961212
(43) Veröffentlichungstag der Anmeldung: 25.07.2001
(73) Patentinhaber: Strawa AG, 7310 Bad Ragaz (CH)
(72) Erfinder: Speckemeyer, Jens, 45475 Mühlheim (DE); Eberle, Beat, 7310 Bad Ragaz (CH)
(74) Vertreter: Hasler, Erich, Dr.

(56) Entgegenhaltungen:
- EP-A- 0 689 928
- DE-U- 7 908 981
- GB-A- 1 339 531
- GB-A- 2 234 697
- US-A- 3 636 803

## Beschreibung

Die Erfindung betrifft ein manuelles Abmantelgerät gemäß dem Oberbegriff des Patentanspruches 1.

Manuelle Abmantelgeräte werden dazu benutzt, um einen bestimmten Abschnitt eines mit einer Schutzschicht versehenen metallischen Rohres abzumanteln. Dazu wird von einer Stirnseite des Rohres aus ein um seine Längsachse drehbares Gehäuse, an dem ein Messer befestigt ist, aufgesteckt und durch Drehen und gleichzeitiges axiales Drücken ein umlaufender Einschnitt in der Schutzschicht erzeugt. Danach kann von Hand der abgetrennte Abschnitt abgezogen werden. Diese Abmantelung ist beim Preßfittingsystem erforderlich, damit ohne die störende Zwischenschicht der metallische Preßfitting mit dem darin eingeschobenen metallischen Rohr mittels einer Preßzange unlösbar miteinander verbunden werden kann. Abmantelgeräte sind seit langem bekannt (siehe Auszug aus dem Firmenprospekt mapress mannesmann pressfitting-system Lieferprogramm Sanitär / Heizung, Sept. 1998, Seite 34). Diese Abmantelgeräte gibt es passend zu den Nennabmessungen der zu verbindenden Rohre in verschiedenen Größen. Bei den bekannten Abmantelgeräten werden durch das axiale Drücken und die verwendeten Messer mit flachen Flanken hohe Reibungskräfte erzeugt und der Spanabfluss behindert, so dass bei lose sitzenden Schutzschichten diese nur tordiert, aber nicht eingeschnitten werden.

Aufgabe der Erfindung ist es, ein manuelles Abmantelgerät anzugeben, mit dem auch lose sitzende Schutzschichten störungsfrei eingeschnitten werden können.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist an einer einen Anschlag für das Rohr bildenden geschlossenen Stirnseite des Gehäuses ein eine geringere radiale Erstreckung als das Gehäuse aufweisender Aufsteckdorn angeordnet, dessen Mittelachse parallel versetzt zur Mittelachse des Gehäuses liegt und dessen obere Mantellinie etwas unterhalb der oberen Mantellinie des Gehäuses sich befindet. Im oberen Mantelbereich des Gehäuses ist ein achsgleich zum Gehäuse liegender schwenkbarer Hebel angeordnet, der bis in den Anfangsbereich des Aufsteckdornes sich erstreckt und im vorderen Endbereich des Hebels als Messer eine flache mit steilen Flanken versehene Klinge befestigbar ist. Der Abstand der Klinge bis zur Stirnseite des Gehäuses entspricht dem vorgegebenen Abstand von der Stirnseite des aufgesteckten Rohres bis zur Einschnittstelle. Der Vorteil der vorgeschlagenen Anordnung ist darin zu sehen, dass durch den axialen Anschlag des aufgesteckten Rohres im wesentlichen nur radial wirkende Kräfte wirksam werden und der Schnittwiderstand der flach ausgebildeten, mit steilen Flanken versehenen Klinge gering ist. Mit diesem Abmantelgerät können auch lose sitzende Schutzschichten problemlos eingeschnitten werden.

Um mit einem Gerät mehrere Nennabmessungen abmanteln zu können, ist nach einem weiteren Merkmal der Erfindung an der geschlossenen Stirnseite des Gehäuses mindestens ein kreisscheibenartig ausgebildeter Vorsprung angeordnet, dessen Mittelachse auf der vertikalen Symmetrieachse des Abmantelgerätes liegt und dessen obere Mantellinie tangential mit der oberen Mantellinie des Aufsteckdornes zusammenfällt. Der Abstand von der Klinge bis zur Stirnfläche des kreisscheibenartigen Vorsprunges entspricht wiederum dem Abstand von der Stirnseite des aufgeschobenen Rohres bis zur Einschnittstelle. Die axiale Erstreckung des Vorsprunges dient dabei als Führung für das aufgesteckte Rohr.

Der notwendige Anpressdruck der Klinge auf die Schutzschicht wird in der Weise erzeugt, dass auf der Unterseite des Hebels eine Druckfeder angeordnet ist, die sich einerseits am Hebel und andererseits auf der Oberseite des Gehäuses abstützt. Die Druckfeder ist so ausgelegt und der Grad der Vorspannung wird so gewählt, dass die zu erwartenden Schutzschichtdicken ohne Schwierigkeiten geschnitten werden können. Außerdem reicht die Kraft dazu aus, die Mantelfläche des darunter liegenden metallischen Rohres leicht anzukratzen und dies als Einschubmarkierung für die spätere Verpressung zu verwenden. Besonders bei lose sitzenden Schutzschichten ist dies von Vorteil, da man ohne eine solche Markierung den erforderlichen Abstand nicht feststellen kann.

Nach einem weiteren Merkmal der Erfindung ist an der Stirnseite des fensterartigen Rahmens, innerhalb dessen der Hebel verschwenkbar ist, ein nasenartiger Vorsprung angeordnet, wobei die Unterseite des Vorsprungs absatzlos in die Unterseite des Rahmens übergeht. Dieser nasenartige Vorsprung schützt zum einen den Benutzer vor Verletzungsgefahr und schützt zum anderen die Klinge beim Aufstecken des abzumantelnden Rohres. Außerdem dient der nasenartige Vorsprung der schnellen und gezielten Führung für das aufzusteckende Rohr.

Die Klinge wird vorzugsweise in einer an der Stirnseite des Hebels angebrachten Ausnehmung befestigt. Dazu weist die Klinge eine Öffnung auf, durch die ein Befestigungselement, vorzugsweise eine Schraube gesteckt werden kann. Die Schraube kann selbstschneidend sein oder mit einer eingepreßten oder eingeschweißten Mutter zusammenwirken. Die Kontur der Ausnehmung ist auf die Kontur der Klinge so abgestimmt, dass ein seitenverkehrter Einbau nicht möglich ist. Außerdem ist die Ausnehmung so gestaltet, dass die Anordnung einer querliegenden Ersatzklinge möglich ist.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1a, b: in perspektivischer Darstellung ein erfindungsgemäß ausgebildetes manuelles Abmantelgerät
- Figur 2: eine Draufsicht
- Figur 3: einen Schnitt in Richtung A-A in Figur 2
- Figur 4: eine Ansicht in Richtung X in Figur 3
- Figur 5: eine perspektivische Darstellung von vom

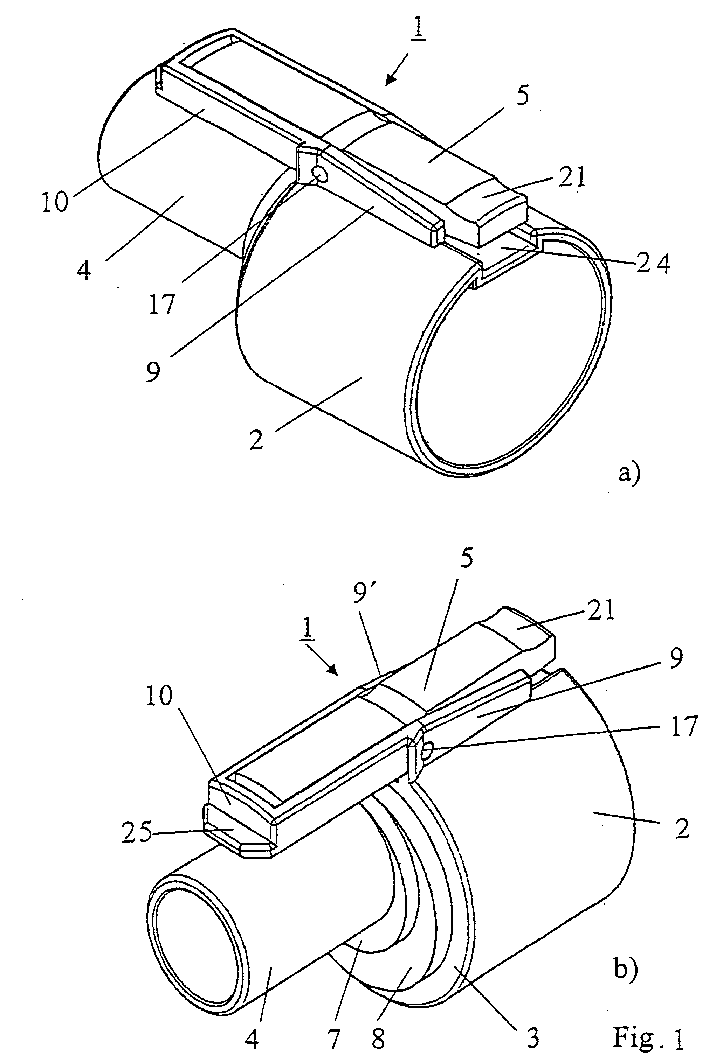

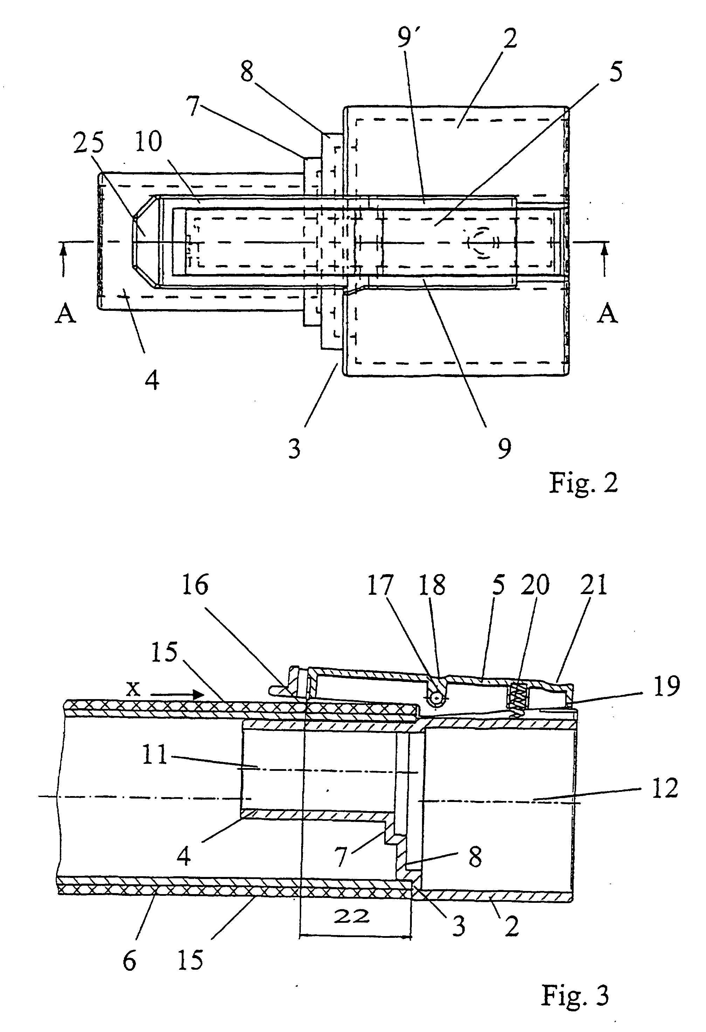

In Figur 1a, b sind in zwei verschiedenen perspektivischen Darstellungen ein erfindungsgemäß ausgebildetes manuelles Abmantelgerät 1 dargestellt. Es besteht aus einem rohrförmigen Gehäuse 2 und einem an der geschlossenen Stirnseite 3 des Gehäuses 2 angeordneten, eine geringere radiale Erstreckung als das Gehäuse 2 aufweisender Aufsteckdorn 4. Im oberen Mantelbereich des Gehäuses 2 ist achsgleich zum Gehäuse 2 liegend ein schwenkbarer Hebel 5 angeordnet, der sich bis in den Anfangsbereich des Aufsteckdornes 4 erstreckt. Um verschiedene Nennabmessungen eines mit einer außen angebrachten Schutzschicht versehenen Rohres 6 (Figur 3) mit nur einem manuellen Abmantelgerät 1 abmanteln zu können, sind an der geschlossenen Stirnseite 3 des Gehäuses 2 in diesem Ausführungsbeispiel zwei kreisscheibenartig ausgebildete Vorsprünge 7,8 angeordnet. Zur Befestigung des Hebels 5 sind im oberen Mantelbereich des Gehäuses 2 zwei parallel liegende hochkantstehende Leisten 9,9' befestigt. Zur Führung des Hebels 5 sind im vorderen Endbereich der beiden Leisten 9,9' ein fensterartig ausgebildeter Rahmen 10 befestigt, in dessen Zwischenraum der Hebel 5 verschwenkbar ist. Zur Aufnahme des beim Niederdrücken sich abwärts bewegenden Bereiches des Hebels 5 weist in diesem Ausführungsbeispiel das Gehäuse 2 im oberen Mantelbereich eine trogförmige Vertiefung 24 auf.

Die weiteren Einzelheiten sind in den Figuren 2 - 5 dargestellt.

In Figur 3 sind die Zusammenhänge am deutlichsten zu erkennen. Ein kennzeichnendes Merkmal ist, dass die Mittelachse 11 des Aufsteckdornes 4 parallel versetzt zur Mittelachse 12 des Gehäuses 2 liegt. Weiterhin liegt die obere Mantellinie 13 des Aufsteckdornes 4 etwas unterhalb der oberen Mantellinie 14 des Gehäuses 2. Die die Schutzschicht 15 einschneidende Klinge 16 ist auswechselbar im vorderen Endbereich des Hebels 5 angeordnet. Der Schwenkbolzen 17 stützt sich zum einen in einem zapfenähnlichen Fortsatz 18 des Hebels 5 und zum anderen in Bohrungen der Laschen 9,9' ab. Im hinteren Endbereich des Hebels 5 ist innenseitig eine Hülse 19 angeordnet, die geeignet ist, ein Ende einer Druckfeder 20 aufzunehmen. Das andere Ende der Druckfeder 20 stützt sich auf der Oberseite des Gehäuses 2 ab. Der Endbereich 21 des Hebels 5 ist muldenförmig gestaltet, um ihn mit einem Finger in einfacher Weise betätigen zu können.

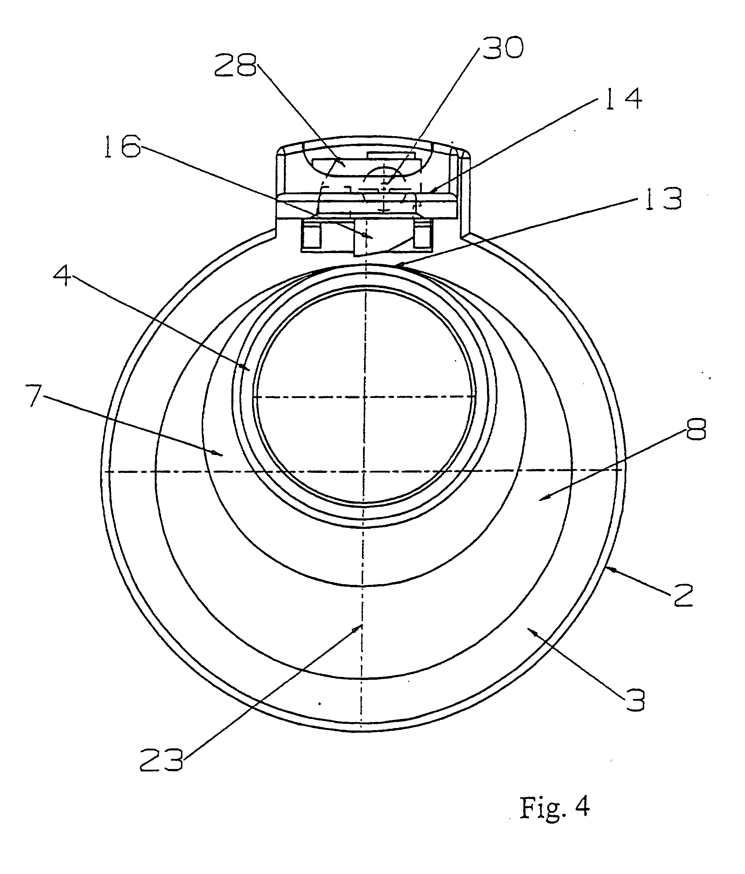

Das Maß der Abmantelung ergibt sich in der Weise, dass dies dem Abstand 22 von der Klinge 16 bis zur Stirnseite 3 des Gehäuses 2 entspricht. Für kleinere Nennabmessungen ist die Stirnfläche des jeweiligen Vorsprunges 7,8 die Anschlagfläche. Dabei ist wesentlich, dass entsprechend der Darstellung in Figur 4 der Mittelpunkt des jeweiligen kreisscheibenartigen Vorsprunges 7,8 auf der vertikalen Symmetrieachse 23 des Abmantelgerätes 1 liegt und die obere Mantellinie tangential mit der oberen Mantellinie 13 des Aufsteckdornes 4 zusammenfällt.

Die Abmantelung erfolgt in folgenden Schritten:
- Schwenken des Hebels 5 durch Niederdrücken des muldenförmig ausgebildeten Endbereiches 21.
- Aufschieben des mit einer Schutzschicht 15 versehenen Rohres 6 auf den Aufsteckdorn 4 bis zum stirnseitigen Anschlag am Gehäuse 2.
- Loslassen des Hebels 5 und Aufsetzen der Klinge 16 auf die Schutzschicht 15.
- Einmaliges oder mehrmaliges Drehen des Abmantelgerätes 1 um das Rohr 6. Dabei Einschneiden der Klinge 16 in die Schutzschicht 15. Ankratzen der metallischen Oberfläche des Rohres 6.
- Schwenken des Hebels 5 durch Niederdrücken des muldenförmig ausgebildeten Endbereiches 21.
- Abziehen des Rohres 6 vom Aufsteckdorn 4. Abstreifen des eingeschnittenen Abschnittes der Schutzschicht 15 vom metallischen Rohr 6.

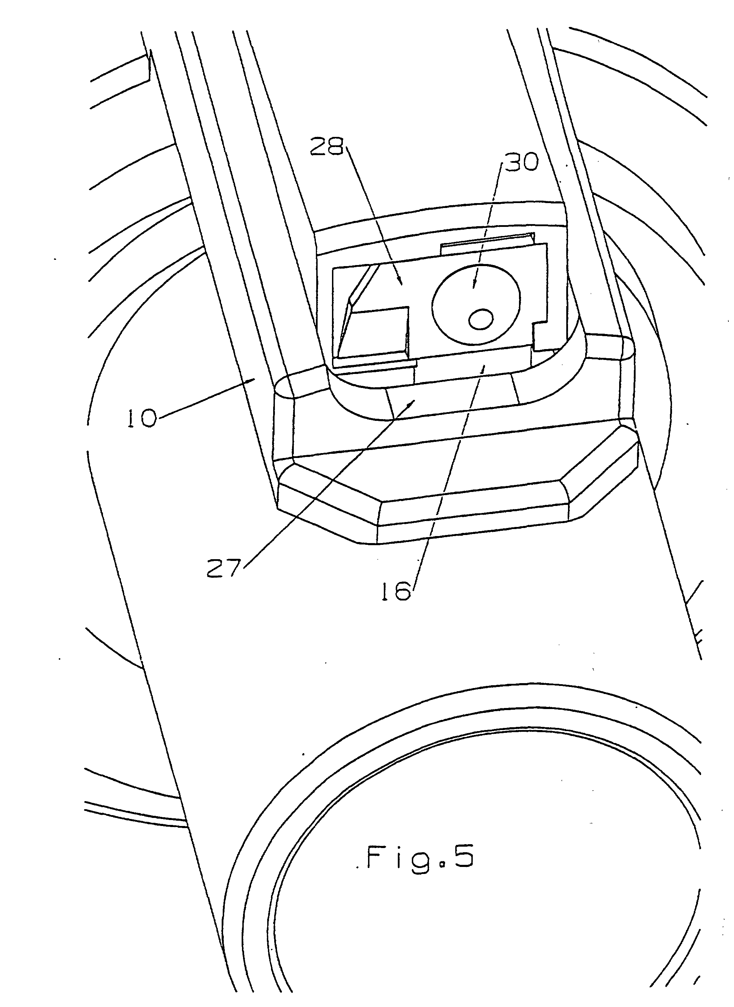

Zur Demontage der Klinge 16 bzw. zum Einbau einer Ersatzklinge 28 wird der Hebel 5 mittels des muldenartig ausgebildeten Endbereiches 21 vorne hochgedrückt, so dass das Befestigungselement 30 gelöst werden kann (Figur 5). Alternativ kann auch der Hebel 5 als Ganzes demontiert werden, wobei sichergestellt ist, dass die Druckfeder 20 dabei nicht verlorengeht.

### Bezugszeichenliste

- 1: Abmantelgerät
- 2: rohrförmiges Gehäuse
- 3: geschlossene Stirnseite
- 4: Aufsteckdom
- 5: schwenkbarer Hebel
- 6: Rohr
- 7,8: kreisscheibenartiger Vorsprung
- 9,9': Leisten
- 10: fensterartiger Rahmen
- 11: Mittelachse des Aufsteckdomes
- 12: Mittelachse des Gehäuses
- 13: obere Mantellinie des Aufsteckdornes
- 14: obere Mantellinie des Gehäuses
- 15: Schutzschicht
- 16: Klinge
- 17: Schwenkbolzen
- 18: zapfenähnlicher Fortsatz des Hebels
- 19: Hülse
- 20: Druckfeder
- 21: Endbereich des Hebels
- 22: Abstand Klinge-Stirnseite
- 23: vertikale Symmetrieachse
- 24: trogförmige Vertiefung
- 25: nasenartiger Vorsprung
- 26: Stirnseite des Hebels
- 27: Ausnehmung
- 28: Ersatzklinge
- 29: Öffnung
- 30: Befestigungselement

## Patentansprüche

1. Manuelles Abmantelgerät bestehend aus einem um seine Längsachse drehbaren rohrförmigen Gehäuse, an dem ein Messer befestigt ist, zum Einschneiden in eine auf einem metallischen Rohr außen angebrachte Schutzschicht in einem bestimmten Abstand von einer Stirnseite des Rohres,
**dadurch gekennzeichnet,**
**dass** an einer einen Anschlag für das Rohr (6) bildenden geschlossenen Stirnseite (3) des rohrförmigen Gehäuses (2) ein eine geringere radiale Erstreckung als das Gehäuse (2) aufweisender Aufsteckdom (4) angeordnet ist, dessen Mittelachse (11) parallel versetzt zur Mittelachse (12) des Gehäuses (2) liegt und dessen obere Mantellinie (13) etwas unterhalb der oberen Mantellinie (14) des Gehäuses (2) sich befindet und dass im oberen Mantelbereich des Gehäuses (2) ein parallel zur Mittelachse (12) des Gehäuses (2) liegender schwenkbarer Hebel (5) angeordnet ist, der bis in den Anfangsbereich des Aufsteckdornes (4) sich erstreckt und im vorderen Endbereich des Hebels (5) als Messer eine flache mit steilen Flanken versehene Klinge (16) befestigbar ist und der Abstand (22) von der Klinge (16) bis zur geschlossenen Stirnseite (3) des Gehäuses (2) dem vorgegebenen Abstand von der Stirnseite des aufgesteckten Rohres (6) bis zur Einschnittstelle entspricht.

2. Manuelles Abmantelgerät nach Anspruch 1,
**dadurch gekennzeichnet,**
**dass** an der geschlossenen Stirnseite (3) des Gehäuses (2) mindestens ein kreisscheibenartig ausgebildeter Vorsprung (7,8) angeordnet ist, dessen Mittelpunkt auf der vertikalen Symmetrieachse (23) des Abmantelgerätes (1) liegt und dessen obere Mantellinie tangential mit der oberen Mantellinie (13) des Aufsteckdornes (4) zusammenfällt und der Abstand von der Klinge (16) bis zur Stirnfläche des kreisscheibenartigen Vorsprunges (7,8) dem Abstand von der Stirnseite des aufgesteckten Rohres (6) bis zum Einschnitt entspricht.

3. Manuelles Abmantelgerät nach Anspruch 1 und 2,
**dadurch gekennzeichnet,**
**dass** im oberen Mantelbereich des Gehäuses (2) zwei parallel zueinander liegende hochkant stehende Leisten (9,9') befestigt sind, zwischen denen der Hebel (5) schwenkbar anordenbar ist.

4. Manuelles Abmantelgerät nach Anspruch 3,
**dadurch gekennzeichnet,**
**dass** die beiden Leisten mit einer Querleiste verbunden sind und einen U-förmigen Trog bilden.

5. Manuelles Abmantelgerät nach Anspruch 3,
**dadurch gekennzeichnet,**
**dass** der obere Mantelbereich des Gehäuses (2) eine parallel zum Hebel (5) liegende muldenförmige Vertiefung (24) aufweist, die zusammen mit den beiden Leisten (9,9') einen U-förmigen Trog bildet.

6. Manuelles Abmantelgerät nach einem der Ansprüche 3 - 5,
**dadurch gekennzeichnet,**
**dass** am vorderen Endbereich der beiden Leisten (9,9') ein fensterartiger Rahmen (10) befestigt ist, in dessen Zwischenraum der Hebel (5) verschwenkbar ist.

7. Manuelles Abmantelgerät nach einem der Ansprüche 1 - 6,
**dadurch gekennzeichnet,**
**dass** im hinteren Endbereich des Hebels (5) auf der Unterseite eine eine Druckfeder (20) aufnehmende Hülse (19) angeordnet ist, deren Achse senkrecht zur Längsachse des Hebels (5) liegt, wobei die Druckfeder (20) sich mit dem anderen Ende auf der oberen Mantelfläche des Gehäuses (2) abstützt.

8. Manuelles Abmantelgerät nach Anspruch 6,
**dadurch gekennzeichnet,**
**dass** an der Stirnseite des fensterartigen Rahmens (10) ein nasenartiger Vorsprung (25) angeordnet ist, dessen Unterseite absatzlos in die Unterseite des Rahmens (10) übergeht.

9. Manuelles Abmantelgerät nach einem der Ansprüche 1 - 8,
**dadurch gekennzeichnet,**
**dass** an der dem Aufsteckdom (4) zugewandten Stirnseite (26) des Hebels (5) eine Ausnehmung (27) zur Aufnahme der Klinge (16) vorgesehen ist.

10. Manuelles Abmantelgerät nach Anspruch 9,
**dadurch gekennzeichnet,**
**dass** die im Befestigungsbereich liegende Kontur der Klinge (16) mit der Kontur der Ausnehmung (27) im Hinblick auf einen seitenrichtigen Einbau der Klinge (16) aufeinander abgestimmt ist.

11. Manuelles Abmantelgerät nach Anspruch 9 und 10,
**dadurch gekennzeichnet,**
**dass** in der Ausnehmung (27) eine querliegende Ersatzklinge (28) anordenbar ist.

12. Manuelles Abmantelgerät nach den Ansprüchen 9-11,
**dadurch gekennzeichnet,**
**dass** die Klinge (16) bzw. Ersatzklinge (28) eine Öffnung (29) zum Durchstecken eines Befestigungselementes (30) aufweist.

## Claims

1. A manual stripping instrument consisting of a tubular housing capable of rotating about its longitudinal axis, to which there is attached a knife for making an incision in a protective layer applied to the outside of a metallic pipe and at a certain distance from an end face of the pipe,
**characterized in that**
on a closed end face (3) of the tubular housing (2) that forms a stop for the pipe (6) there is arranged a mandrel (4) having a smaller radial extension than the housing (2), the central axis (11) of the mandrel being displaced parallel to the central axis (12) of the housing (2), while its upper jacket line (13) is situated slightly below the upper jacket line (14) of the housing (2), and that in the region of the upper jacket of the housing (2) there is arranged parallel to the central axis (12) of the housing (2) a lever (5) capable of being swivelled that extends as far as the initial region of the mandrel (4) and that a flat blade (16) provided with steep sides can be fixed as knife to the forward end region of the lever (5) and the distance (22) from the blade (16) to the closed end face (3) of the housing (2) corresponds to the predetermined distance between the end face of the attached pipe (6) to the position of the incision.

2. A manual stripping instrument in accordance with Claim 1,
**characterized in that**
on the closed end face (3) of the housing (2) there is arranged at least one projection (7, 8) shaped in the manner of a circular disc, of which the centre point lies on the vertical axis of symmetry (23) of the stripping instrument (1) and of which the upper jacket line coincides tangentially with the upper jacket line (13) of the mandrel (4) and the distance from the blade (16) to the end face of the circular-disc-like projection (7, 8) corresponds to the distance from the end face of the mounted pipe (6) to the incision.

3. A manual stripping instrument in accordance with Claim 1 or Claim 2,
**characterized in that**
in the upper jacket region of the housing (2) there are attached two battens (9, 9') lying parallel to each other and standing on edge, between which the lever (5) can be arranged so as to be capable of being swivelled.

4. A manual stripping instrument in accordance with Claim 3,
**characterized in that**
the two battens are joined by a transverse batten and form a U-shaped trough.

5. A manual stripping instrument in accordance with Claim 3,
**characterized in that**
the upper jacket region of the housing (2) is provided with a pan-shaped recess (24) lying parallel with the lever that, together with the two battens (9, 9'), forms a U-shaped trough.

6. A manual stripping instrument in accordance with any one of Claims 3 to 5,
**characterized in that**
at the forward end face of the two battens (9, 9') there is attached a window-like frame (10) within the interior space of which the lever (5) can be swivelled.

7. A manual stripping instrument in accordance with any one of Claims 1 to 8,
**characterized in that**
on the underside in the rearward end region of the lever (5) there is arranged a sheath (19) accommodating a pressure spring (20) with an axis lying at a right angle to the longitudinal axis of the lever (5), the pressure spring (20) bearing with its other end against the upper jacket surface of the housing (2).

8. A manual stripping instrument in accordance with Claim 6,
**characterized in that**
on the end face of the window-like frame (10) there is arranged a nose-like projection (25), of which the underside merges smoothly with the underside of the frame (10).

9. A manual stripping instrument in accordance with any one of Claims 1 to 8,
**characterized in that**
on the end face (26) of the lever (5) that faces towards the mandrel (4) there is provided a recess (27) to accommodate the blade (16).

10. A manual stripping instrument in accordance with Claim 9,
**characterized in that**
the contour of the blade (16) lying in the attachment region is harmonized with the contour of the recess (27) with a view to assuring that the blade (16) will be built in with its right side.

11. A manual stripping instrument in accordance with Claim 9 and Claim 10,
**characterized in that**
a replacement blade (28) lying in the transverse direction can be arranged in the recess (27).

12. A manual stripping instrument in accordance with any one of Claims 9 to 11,
**characterized in that**
the blade (16) and/or the replacement blade (28) are provided with an opening (29) through which a fixing element (30) can be passed.

## Revendications

1. Appareil à dénuder manuel consistant en un bâti en forme de tube rotatif autour de son axe longitudinal auquel un couteau est fixé pour entailler une couche de protection fixée à l'extérieur sur un tube métallique à un écart défini d'une face frontale du tube,
**caractérisé en ce**
**qu'**un mandrin à emboîtement (4) qui présente une extension radiale plus faible que le bâti (2) est placé sur une face frontale (3) fermée qui forme une butée pour le tube (6), mandrin dont l'axe central (11) est situé décalé parallèlement par rapport à l'axe central (12) du bâti (2) et dont la génératrice supérieure (13) se trouve un peu au-dessous de la génératrice supérieure (14) du bâti (2) et qu'un levier pivotant situé parallèlement par rapport à l'axe central (12) du bâti (2) est placé dans la zone supérieure d'enveloppe (14) du bâti (2), levier qui s'étend jusque dans la zone de début du mandrin à emboîtement (4) et une lame plate (16) pourvue de flancs raides peut être fixée comme couteau dans la zone d'extrémité antérieure du levier (5) et l'écart (22) de la lame (16) à la face frontale fermée (3) du bâti (2) correspond à l'écart prédéfini de la face frontale du tube emboîté (6) à l'endroit de l'entaille.

2. Appareil à dénuder manuel selon la revendication 1,
**caractérisé en ce**
**qu'**au moins une saillie (7, 8) configurée de type disque de cercle est placée sur la face frontale fermée (3) du bâti (2), saillie dont le centre se trouve sur l'axe de symétrie vertical (23) de l'appareil à dénuder (1) et dont la génératrice supérieure coïncide tangentiellement avec la génératrice supérieure (13) du mandrin à emboîtement (4) et l'écart de la lame (16) à la face frontale de la saillie de type disque de cercle (7, 8) correspond à l'écart de la face frontale du tube emboîté (6) jusqu'à l'entaille.

3. Appareil à dénuder manuel selon la revendication 1 et 2,
**caractérisé en ce**
**que** deux baguettes (9, 9') placées de chant parallèlement l'une à l'autre sont fixées dans la zone d'enveloppe supérieure du bâti (2), baguettes entre lesquelles le levier (5) est placé pivotant.

4. Appareil à dénuder manuel selon la revendication 3,
**caractérisé en ce**
**que** les deux baguettes sont reliées à une baguette transversale et forment une cuve en forme d'U.

5. Appareil à dénuder manuel selon la revendication 3,
**caractérisé en ce**
**que** la zone d'enveloppe supérieure du bâti (2) présente un évidement (24) en forme d'auge situé parallèlement au levier (5) qui forme avec les deux baguettes (9, 9') une cuve en forme d'U.

6. Appareil à dénuder manuel selon l'une des revendications 3 à 5,
**caractérisé en ce**
**qu'**un cadre du type fenêtre (10) est fixé dans la zone d'extrémité antérieure des deux baguettes (9, 9'), cadre dans l'espace intermédiaire duquel le levier (5) est pivotant.

7. Appareil à dénuder manuel selon l'une des revendications 1 à 6,
**caractérisé en ce**
**qu'**une douille (19) qui loge un ressort de compression (20) est placée dans la zone d'extrémité postérieure du levier (5) sur la face inférieure, douille dont l'axe est perpendiculaire à l'axe longitudinal du levier (5), le ressort de compression (20) s'appuyant avec l'autre extrémité sur la surface d'enveloppe supérieure du bâti (2).

8. Appareil à dénuder manuel selon la revendication 6,
**caractérisé en ce**
**qu'**une saillie de type ergot (25) est placée sur la face frontale du cadre de type fenêtre (10), saillie dont la face inférieure se convertit sans décrochement dans la face inférieure du cadre (10).

9. Appareil à dénuder manuel selon l'une des revendications 1 à 8,
**caractérisé en ce**
**qu'**un évidement (27) pour loger la lame (16) est prévu sur la face frontale (26) du levier (5) qui est tournée vers le mandrin à emboîtement (4).

10. Appareil à dénuder manuel selon la revendication 9,
**caractérisé en ce**
**que** les contours de la lame (16) qui se situent dans la zone de fixation sont adaptés l'un à l'autre aux contours de l'évidement (27) pour ce qui est d'un montage du côté correct de la lame (16).

11. Appareil à dénuder manuel selon la revendication 9 et 10,
**caractérisé en ce**
**qu'**une lame de rechange située transversalement (28) peut être placée dans l'évidement (27).

12. Appareil à dénuder manuel selon les revendications 9 à 11,
**caractérisé en ce**
**que** la lame (16) ou la lame de rechange (28) présente une ouverture (29) pour faire passer un élément de fixation (30).
